# EUROPEAN PATENT SPECIFICATION

(11) **EP 4 110 991 B1**
(45) Date of publication and mention of the grant of the patent: **27.11.2024**
(21) Application number: 21710032.0
(22) Date of filing: 24.02.2021
(51) Int. Cl.: D21H 17/06, B65D 65/42, D21H 17/14, D21H 17/24, D21H 17/30, D21H 17/00, D21H 19/10, D21H 27/10

(54) **A PACKAGING ITEM**
EIN VERPACKUNGSARTIKEL
UN ARTICLE D'EMBALLAGE

(30) Priority: 24.02.2020 GB 202002570
(43) Date of publication of application: 04.01.2023
(73) Proprietor: Notpla Limited, London E9 5EN (GB)
(72) Inventor: PASLIER, Pierre-Yves, London E9 5EN (GB); GARCIA GONZALEZ, Rodrigo, London E9 5EN (GB)
(74) Representative: Potter Clarkson
(86) International application number: PCT/GB2021/050474
(87) International publication number: WO 2021/171016

(56) References cited:
- WO-A1-2009/121926
- WO-A1-2013/173434
- CA-A1- 3 089 434
- US-A- 5 820 998

## Description

### Field of the Invention

The present invention relates to a greaseproof and waterproof packaging item comprising a composite material.

### Background

Paper fibre materials are used for a wide range of applications such as packaging of food or liquid products in cups, boxes and other containers. Paper fibres are useful as after contact with water they lose rigidity of structure and become malleable which allows them to be formed into a desirable shape. However, the loss of strength and rigidity means that subsequent use, e.g. in packaging thereafter is limited unless a structural material is provided. Similar issues are present in other fibre materials mad malleable by water.

Often to maintain the structural strength necessary for use of paper-fibre based material in packaging applications, the addition of a coating is necessary. For a vast majority of applications, the coating is a petroleum based polymer, such as low density polyethylene (LDPE). The plastic lining typically only comprises a small percent of the overall weight of the packaging.

For certain applications, such as cold beverages, wax can be used but is not compatible with products or utilised in either storage conditions or operating environments that may involve higher temperatures.

Coatings are typically applied at a high temperature and form a strong bond with the substrate material, which prevents any separation from the paper fibre at the end of life of the packaging. As a result, few paper fibre based materials used in packaging, such as takeaway coffee cups, ever get recycled. This is predominantly due to the fact that the plastic used to laminate the cups has to be removed before the paper is pulped, requiring a complex and energy intense process which adds significant cost to the process. The typical consequence is that the vast majority of these packaging is sent to landfill or incinerated leading to significant environmental impacts.

Plastic laminates in landfill will likely take hundreds of years to decompose completely but quickly fragment into micro-particles that can easily enter the food chain, which is highly undesirable.

In an attempt to address this issue biodegradable and bioactive thermoplastics, such as polylactic acid (PLA), have been used in conjunction with packaging fibres to reduce the future environmental impact. However, such waste is still required to be collected separately and composted in an industrial facility. PLA is also more expensive material and can contaminate other recycling schemes if recycling is undertaken incorrectly, rendering it a riskier option.

There remains a need for a cost effective, environmentally sustainable solution for packaging products, in particular, for liquid-based products, in order to optimise waste management.

The present invention has arisen from a desire to address the technical problems that have not to date been addressed by the prior art.

### Summary of the invention

Embodiments of the invention are as defined in the claims.

The present invention relates to a greaseproof and waterproof packaging item comprising a composite material, the composite material comprising a fibre substrate and a coating, wherein the coating comprises a crosslinked naturally derived polysaccharide, wherein the cross-linked naturally derived polysaccharide is an alginate, and wherein the composite material further comprises a bio-based plasticizer.

The coating comprising the cross-linked naturally derived polysaccharide may form a coating or barrier on at least a surface of the fibre substrate improving the use properties of the packaging material. Packaging according to the present invention is, particularly useful in the food service sector where its stability in contact with high temperature contents provides an ideal solution for transport and short term storage of hot foodstuffs such as soup, curry, and sauced meals.

Grease proofing, water proofing and heat resistance are well understood but in the avoidance of doubt, the coating of such packaging needs to ensure the integrity of the underlying fibre substrate for at least 2 hours against the grease and water typically found in food and beverages, which can soak the fibres, causing significant discolouration and softening of the substrate. Hot meals and drinks can often be placed in contact with the coating at temperatures above 90 degrees Celsius, and heat resistance is therefore required for many applications.

The cross-linked naturally derived polysaccharide reduces the water and oil permeability of the fibre substrate and thus increases the mechanical strength of the substrate. Such an arrangement permits the substrate to be flexed into any desirable shape following contact with water but then used for holding and packaging liquids without loss of structural integrity.

Further, the cross linked naturally derived polysaccharide is very specific selection of a natural polysaccharide product, which is extracted from the cell wall of brown seaweed that grows in cold water regions. Polysaccharides, such as naturally derived polysaccharides, do not contaminate other recycling schemes as they are considered as a food waste and hence do not suffer the undesirable effects of biodegradable plastic coatings. In contrast, polysaccharides are a natural, environmentally friendly product which when combined with a fibre substrate can be set to forms a clear, rigid and thermo-chemically stable barrier in the form of a gel coating or barrier.

In some embodiments the fibre substrate is selected from paper, paperboard, and cardboard. In other embodiments the fibre substrate is vegetable fibres, food waste fibres, plant based fibres or other fibres. The composite of the invention therefore permits cheap and readily available paper and other fibre materials that typically cannot be used, or are used combination with environmentally undesirable materials, to be useful for packaging liquid-based products. The combination of a fibre substrate and a cross linked naturally derived polysaccharide usefully enables the composite of the invention to comprise both a substrate and coating which are biodegradable and/or recyclable.

In particular the packaging may selected from a cup, box, clamshell, tray, plate, bag, wrap, bottle, cup holder or egg box.

Any packaging item, such as those listed above, will eventually form waste. However, the composite of the invention enables such waste to be cheaply and easily re-pulped and recycled without the need to use an industrial composter or other specialist recycling systems. Alternatively, even if it is discarded in the environment, it will degrade within months rendering it environmentally safer than products of the prior art.

In embodiments other compounds, such as guar gum, gum arabic, thermoplastic starch, hydroxypropyl methylcellulose, agar, konjac glucomannan, Iota-carrageenan, Kappa-carrageenan, low methoxyl pectin, sorbitol, gellan gum, xanthan gum and glycerol, can be added on to the naturally derived polysaccharide material before crosslinking to increase plasticity. This addition advantageously toughens the coating and prevents cracks/breakages in the latter processing stages of manufacturing, additionally it provides reinforcement in creased and bent sections of the final shape where oil and water can seep in through microfractures.

Low methoxyl pectin is a paectic polysaccharide of heterogenous galaturonic acid chains with a low degree of methanol esterification, e.g <50%. In certain embodiments, additional stabilisers or other compounds for increasing plasticity or other properties can be used. These may include one or more selection from 1,3- butylene glycol, acacia, acetic and fatty acid esters of glycerol, acetone, acetylated distarch adipate, acetylated monoglycerides, acid-treated starch,agar , alginic acid, alkaline-treated starch, anoxomer, ascorbic acid, ascorbyl palmitate, ascorbyl stearate, azodicarbonamide, beeswax, bleached starch, bone phosphate, brominated vegetable oil, calcium acetate, calcium alginate, calcium aluminum silicate, calcium ascorbate, calcium benzoate, calcium bromate, calcium carbonates, calcium chloride, calcium citrate, calcium dihydrogen phosphate, calcium disodium ethylenediaminetetraacetate, calcium DL-malate, calcium ferrocyanide, calcium gluconate, calcium hydrogen sulfite, calcium hydroxide, calcium iodate, calcium lactate, calcium lactate gluconate, calcium lactobionate, calcium peroxide, calcium phosphate, calcium polyphosphates, calcium propionate, calcium pyrophosphatecalcium salts of fatty acids, calcium silicate, calcium sorbate, calcium stearate, calcium stearoyl lactylate, calcium sulfate, calcium tartrate, calciumiodiate, candelilla wax, carbamide, carbon dioxide, carnauba wax, carob bean gum, carrageenan, castor oil, cellulose gum, celluloses, choline salts and esters, citric acid, citric and fatty acid esters of glycerol, crosslinked sodium carboxymethylcellulose, cupric sulfate, D-alpha- tocopherol, dammargum, decanoic acid, dedesoxycholic acid, dedextrins, dextrin ethyl cellulose, dextrose, diacetyltartaric acid esters of mono- and diglycerides of fatty acids, diammonium hydrogen phosphate, dicalcium pyrophosphate, diethyl pyrocarbonate, ethyl alcohol, ethyl cellulose, ethyl hydroxyethyl cellulose, ethyl p-hydroxybenzoate, ethyl protocatechuate, ethylene dichloride, esters of glycerol and thermally oxidized soy bean fatty acids, ethoxylated mono- and diglycerides, ethyl hydroxyethyl cellulose, formic acid, gellan gum, gelatin, genipin, gibberellic acid, glucono delta-lactone, glycerin, glycerol, glycerol ester of wood rosin, guaiac resin, guar gum, gum acacia, gum arabic, gum ghatti, gum guaiac, heptylparaben, peroxide derivatives, hydrogen peroxide, hydroxylated lecithin, hydroxypropyl cellulose, hydroxypropyl distarch phosphate, hydroxypropylmethyl cellulose, hydroxypropyl starch, insoluble polyvinylpyrrolidone, isoamyl gallate, isopropyl alcohol, isopropyl citrate mixture, kaolin, karaya gum, L(+)-tartaric acid, lactated monodiglycerides, lactic and fatty acid esters of glycerol, lactitol, lactylated fatty acid esters of glycerol and propylene glycol, lecithin, locust bean gum, maltitol, mannitol, methyl alcohol, methyl ethyl cellulose, methylcellulose, methylene chloride, microcrystalline cellulose, milk protein, mineral oil, modified cellulose, modified starches, monoglyceride citrate, mono- and diglycerides, monostarch phosphate, myristic acid, nisin, nitrogen, nitrous oxide, nordihydroguaiaretic acid, o-phenylphenol, palmitic acid, paraffin wax, pectin, pentapotassium triphosphate, pentasodium triphosphate, petrolatum, phosphated distarch phosphate, phosphoric acid, pimaricin, polydextroses, polyethylene glycols, polyglycerol esters of fatty acids, polyoxyethylenes, polypropylene glycol, polysorbates, polyvinylpolypyrrolidone, polyvinylpyrrolidone, potassium acetate, potassium acid tartrate, potassium alginate, potassium benzoate, potassium bicarbonate, potassium carbonate, potassium citrate, potassium dihydrogen citrate, potassium dihydrogen phosphate, potassium gluconate, potassium hydroxide, potassium iodate, potassium lactate, potassium polyphosphates, potassium L(+)-tartrate, potassium salts of fatty acids, potassium sorbate, potassium sulfate, potassium sulfite, potassium tripolyphosphate, processed eucheuma seaweed, propane- 1,2-diol alginate, propionic acid, propyl gallate, propylene glycol, propylene glycol alginate, propylene glycol esters of fatty acids, propylene glycol mono- and diesters, propylene oxide, propylparaben, quillaia extracts, rice bran wax, salts of fatty acids, shellac, sodium acetate, sodium acid, sodium acid pyrophosphate, sodium adipate, sodium alginate, sodium aluminosilicate, sodium aluminum phosphate, sodium ascorbate, sodium benzoate, sodium bicarbonate, sodium bisulfite, sodium carbonate, sodium carboxymethylcellulose, sodium caseinate, sodium chloride, sodium citrate, sodium dehydroacetate, sodium diacetate, sodium dihydrogen citrate, sodium dihydrogen phosphate, sodium dioxide, sodium DL- malate, sodium erythorbate, sodium ferrocyanide, sodium fumarate, sodium gluconate, sodium hydrogen carbonate, sodium hydrogem DL-malate, sodium hydrogen sulfite, sodium hydroxide, sodium hypophosphite, sodium L(+)-tartrate, sodium lactate, sodium potassium tartrate, sodium propionate, sodium pyrophosphate, sodium salts of fatty acids, sodium sesquicarbonate, sodium stearoyl lactylate, sodium stearyl fumarate, sodium sulfite, sodium tartrate, sodium thiosulfate, sodium tripolyphosphate, sorbic acid, sorbitan monolaurate, sorbitan monooleate, sorbitan monopalmitate, sorbitan monostearate, sorbitan tristearate, sorbitol, sorbitol sodium, sulfur dioxide, stannous chloride, starches, starch acetate, starch sodium octenylsuccinate, stearic acid, stearyl citrate, stearyl monoglyceridyl citrate, stearyl tartrate, sucroglyceriddes, sucroses, sucrose acetate isobutyrate, sucrose esters of fatty acids, talc, tannic acid, polyphenols, tara gum, tartaric acid, tragacanth, tragacanth gum, triacetin, triammonium citrate, tricalcium phosphate, trichloroethylene, triethyl citrate, trimagnesium phosphate, tripolyphosphate, tripotassium citrate, tripotassium phosphate, trisodium citrate, trisodium phosphate, urea, waxes, xanthan gum, xylitol, and derivatives and combinations thereof.

In some embodiments, a polyphenol or a combination of polyphenols is added to the polysaccharide material before crosslinking.

Polyphenols are a class of astringent molecules that bind to and precipitate proteins and various other organic compounds including amino acids and alkaloids. Without wishing to be bound by theory, it is thought that anionic carboxyl groups in the polyphenol molecule are capable of improving the barrier properties of the coating of the invention through interaction with the polyvalent metal ions in the crosslinked polysaccharide, reconfiguring the network of sterically hindered polysaccharide molecules to form a tightly packed structure with reduced free space thus limiting interactions between naturally derived polysaccharide hydroxyl groups and polar water molecules.

Suitable polyphenols comprise branched, star polymers of gallic acid blocks. These can be derived from many types of plant parts, including Tara pods (Caesalpinia spinosa), gallnuts from Rhus semialata or Quercus infectoria or Sicilian sumac leaves (Rhus coriaria). The extracted tannic acid should ideally be refined to medium or high molecular weight chains to maximise the number of available bonding sights in the crosslinked polysaccharide network.

The invention further comprises a process for making the packaging item.

For example, the coating may be applied to the packaging item by reverse roll, gravure, meyer bar, air knife, doctor blade, or a slot die technique. In each of these techniques, the fibre substrate may be a reel of paperboard which is trained through a set of rollers and fed through a 'coating head' which meters the polysaccharide solution onto the substrate. The named processes refer to the metering method which are distinct, but operate on similar principles, i.e. that a specified quantity of coating material is mechanically applied directly onto the substrate. The coated board is then fed into an oven for drying. The dried reel is then run a second time through the apparatus for crosslinking.

In some embodiments, the coating may be applied by curtain coating, which is similar to the aforementioned techniques due to the presence of a reel of paperboard substrate being fed through an apparatus of rollers and a coating station. However, curtain coating differs from the herein above described techniques by its method of transferring the solution to the substrate, which is to pipe an aqueous solution through a metered gap to form a 'curtain' or 'waterfall' which deposits the coating onto the substrate before it enters an oven for drying. The dried reel is then run a second time through the apparatus for crosslinking.

In some embodiments, the coating may be applied by spraying. This technique differs from the other techniques in that it is used for 3D moulded substrates. These are fed through a multi-headed spray system and then fed into an oven for drying. This is then repeated for crosslinking.

In one embodiment the process may be repeated at least once in order to build up a double or multi-layered composition packing material.

Since the pulp of the substrate is still moist or wet, the polysaccharide impregnates the surface and when it is cross links is well adhered to the substrate.

Further, in embodiments, the naturally derived polysaccharide solution may be selected to ensure a viscosity that is much higher than water. The viscosity of water at 20 °C is almost exactly 1 centipoise.

Viscosity of a preferred naturally derived polysaccharide solution is typically in the range 200-10000 centipoise (cP) thus, advantageously, its application does not disintegrate the pulp structure of the substrate.

It is not essential that the substrate is wet, but in such a case care must be taken to remove excess polysaccharide solution before undertaking the crosslinking step (by applying poly valent metal ion solution). This effect may be achieved by other means, if for example the polysaccharide is applied to a dry substrate, the substrate surface may be first lightly steamed (or the process undertaking in a moist environment) such that the polysaccharide is still able to impregnates the surface more effectively without that substrate itself being wet.

In one embodiment the naturally derived polysaccharide solution can be applied to a flat sheet or roll of fibre substrate by applying a layer of the water-based solution of polysaccharide to the surface. In embodiments, the application of the water-based polysaccharide may be via dipping or spraying. Dip coating is particularly useful when to applying the polysaccharide on three dimensional packages or products such as cups or boxes.

The cross-linked naturally derived polysaccharide obtained in the manufacture of the invention can be sourced from common inexpensive products such as water-based naturally derived polysaccharide solutions. The composite of the invention is therefore economically efficient to produce since it does not require expensive components to obtain the functionality of an effective barrier and such products are environmentally neutral.

In some embodiments, the water-based naturally derived polysaccharide is an alginate, for example a salt alginate, such as sodium alginate. Sodium alginate is typically used in other industries, such as the food industry as a thickener in sauces, syrups and toppings or as a stabiliser in ice cream. In embodiments, the water- based alginate can be any forms of alginate that is biologically acceptable.

In some embodiments the water-based solution of polyvalent metal may be a metal ion such as a cation, including Calcium. In the presence of poly cations, such as calcium, the naturally derived polysaccharide will cross link to form a firm coating over the substrate. In embodiments the water- based solution of polyvalent metal may be applied via dipping or spraying.

After drying, in the case of a flat roll of composite, it can be cut, folded and glued to form products that are water and oil proof, such as cups, boxes, bottles or other objects. In a further embodiment of the present invention there is a method of manufacturing water and/or oil proof packaging product comprising: forming a composite material by applying a water-based naturally derived polysaccharide solution to a fibre-based substrate, applying a water-based solution of polyvalent metal to crosslink the polysaccharide, forming the composite into a desired packaging shape or form and drying the composite. The process permits useful products to be formed from the composite whilst enabling other technical properties such as waterproofing and resistance as well as mechanical strength.

The invention extends further to a coating for use with a fibre substrate selected from paper, paperboard, cardboard, vegetable fibres, food waste fibres, plant based fibres, the coating comprising one or more layers of crosslinked polysaccharide. For example, the coating of the invention can be also applied to corrugated cardboard boxes in order to make them waterproof and more resistant to outside weather when transported.

### Brief description

The invention is described with reference to the accompanying drawings in which:

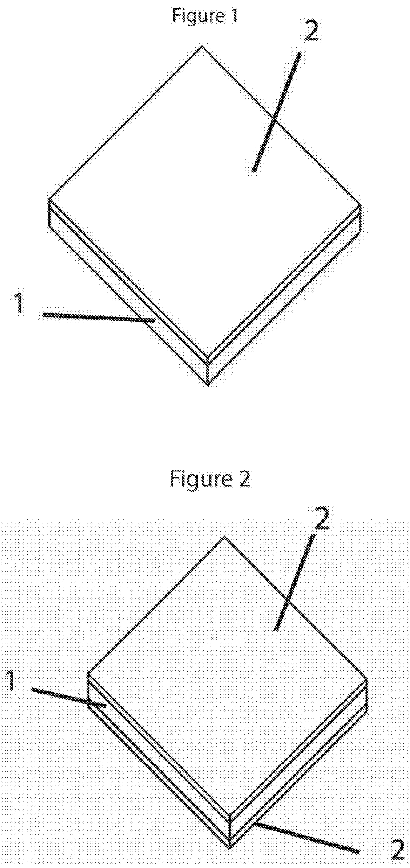

Figure 1 shows a diagram of a fibre material (1) with a single coating of a crosslinked polysaccharide membrane (2);
Figure 2 shows a diagram of a fibre material (1) with a double coating of a crosslinked naturally derived polysaccharide membrane, internal and external (2).

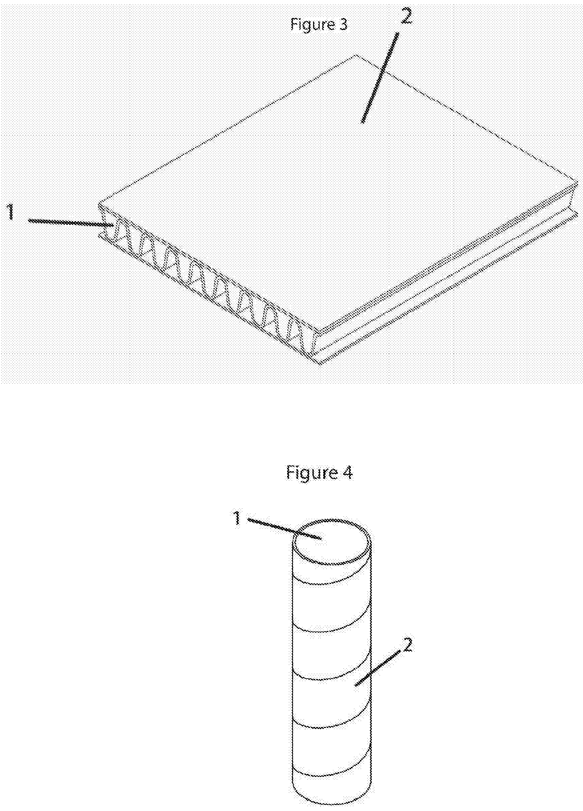

Figure 3 shows a plain corrugated sheet of fibre material (1) with an external crosslinked polysaccharide membrane (2)
Figure 4 shows a tube made of fibre material (1) with an external crosslinkednaturally derived polysaccharide membrane (2)

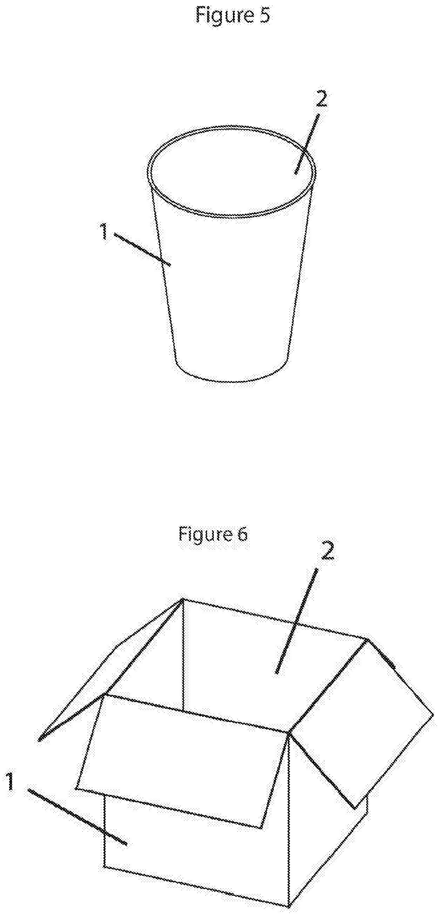

Figure 5 shows a fibre cup (1) with an internal coating of a crosslinked polysaccharide membrane (2);
Figure 6 shows a corrugated cardboard box (2) with an external coating of a crosslinked polysaccharide membrane (1). This makes the exterior of the cardboard box waterproof and greaseproof.

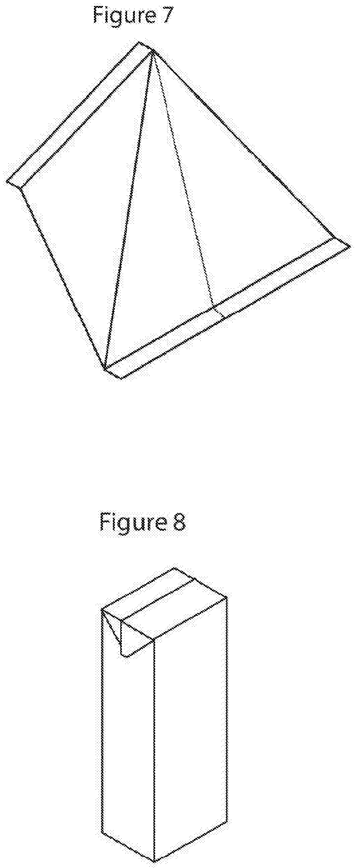

Figure 7 shows a tetrahedral shape fibre container with an internal coating of a crosslinked naturally derived polysaccharide membrane.
Figure 8 shows a parallelepiped shape fiber container with an internal coating of a crosslinked polysaccharide membrane.

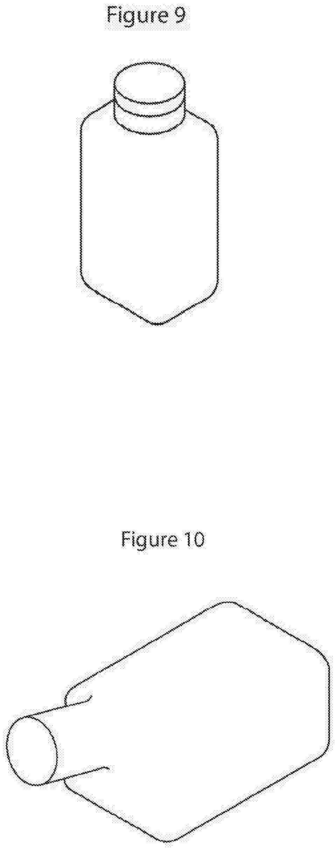

Figure 9 shows a bottle shape fiber container with an internal coating of a crosslinked naturally derived polysaccharide membrane.
Figure 10 shows a fiber urinal bottles container with an internal coating of a crosslinked polysaccharide membrane.

### Detailed description

The invention will now be described by way of the following examples. The skilled person will envisage that features which are optional can be used in different combinations to construct various different embodiments and examples of the invention not limited to composites, products, coatings and methods of producing the same.

### Example 1 - Dispersion coating onto flat paperboard

A method of forming a greaseproof and waterproof paperboard for conversion into food packaging, according to one embodiment the invention is provided as follows:
A reel of uncoated paperboard is fed through an apparatus of rollers and passed through a 'coating head'. Here a viscous polysaccharide solution (10,000 mPa.s) is mechanically applied at a defined thickness to the moving substrate by any of the following methods: air knife, reverse roll, meyer bar, doctor blade, slot die, gravure.

The coated board is then passed through a series of ovens to dry the aqueous solution onto the surface before being rewound into a new reel.

The output reel is then passed through a saline solution in the coating section. This is once again dried and rewound into a final reel. This reel is then passed on to board converters for transformation into a 3D food container.

### Example 2 - Transfer Moulding with Spraying Method

A method of forming a greaseproof and waterproof tray for short term food storage and delivery, according to one embodiment the invention is provided as follows:
A 3D tray is formed via fiber thermoforming. Optimally this tray if formed from cellulose fibres and starch as a binder with no additional barrier additives.

This tray is passed through a multi-headed spray system which applies a layer of saline. This soaks into the fibers before passing through a secondary spray system which applies a layer of polysaccharide solution to the substrate, where it reacts with the saline and forms an insoluble membrane.

The coated tray is then passed through a conveyer oven for drying and packed into boxes for transport to the end user.

### Example 2a: Transfer moulding and dipping method

A method of forming a waterproof cup, according to an embodiment of the invention is provided as follows:
A cup was formed through the "Transfer Moulded" moulded pulp process. This is similar to how egg-boxes are made; a cup shaped mesh is mated with a vacuum chamber that draws water through the mesh into the chamber, with the mesh mould suspended above a liquid return pool. The fibrous slurry similar to that of Example 1 is sprayed from below onto the mould, and the vacuum draws the slurry tightly against the mesh, filling all gaps and spaces. When airflow through the mesh has been sufficiently blocked, the excess slurry falls into the return pool for recycling, and the mould advances onward to the drying process, following by separation of the mesh mould from the dried fibre plating.

The formed cup, still wet, is then dipped in the same polysaccharide solution as in Example 1. The polysaccharide covered cup was then strained and dipped in the Calcium Chloride solution to crosslink the polysaccharide for 10 minutes.

The cup was rinsed with water to remove any calcium chloride residue and dried to reach the full mechanical strength of dried pulp.

### Example 2b: Transfer moulding with calcium and dipping method

A method of forming a waterproof container, according to an embodiment of the invention is provided as follows:
A container was formed through the "Transfer Moulded" moulded pulp process.

However, in this case, the liquid return pool contained calcium ions in solution within the fibre substrate itself. The pulp mix thus typically comprises a concentration of 0.1 - 10% calcium.

The formed moist cup is then dipped in the same polysaccharide solution as in Example 1, causing the ions in the pulp to crosslink immediately. The polysaccharide covered cup was then strained and dipped in a Calcium Chloride solution to further crosslink the polysaccharide for 10 minutes. In one example, glycerol was added to the bath to increase the flexibility.

The cup was rinsed with water to remove any calcium chloride residue and dried to reach the full mechanical strength of dried pulp.

### Example 3 - Dry application and laminate

A method of forming a waterproof cup, according to an embodiment of the invention is provided as follows:
Uncoated card was die cut into the shape of the walls of the cup as well as the bottom. The cup was then formed around a conical rig and was sealed using non water soluble glue: plant-based pine oleoresin.

The formed cup was then dipped in the same polysaccharide solution as in Example 1. The polysaccharide covered cup was then duly strained, taking care to remove excess as polysaccharide. This is important in such an example as the excess does not adhere as well on dried paper as on wet pulp. For example, a meniscus shaped polysaccharide film would then form should any excess remain, which would not stick tightly to the surface of the cup.

The strained cup was then dipped in the Calcium Chloride solution (Example 1) to crosslink the polysaccharide for 10 minutes. The cup was rinsed with water to remove any calcium chloride residue and dried to reach the full mechanical strength of dried pulp.

### Example 4: Corrugated packaging

A method of forming a waterproof corrugated cardboard for boxes, according to an embodiment of the invention is provided as follows:
The corrugated cardboard is formed from a wavy sheet of paper, called a flute, sandwiched between two flat sheets, called liners. The waterproof polysaccharide layer is applied to any or to all of these components.

First, a recyclable pulp paper roll of paper is blasted with hot steam layer of polysaccharide. A 1.2% polysaccharide solution is used to achieve a cardboard substrate with 1-6 g/m² and optimally 3 g/m² of polysaccharide. Glycerol could be optionally added at this stage to further plasticise the substrate.

The depth of the polysaccharide film should optimally be 40-60 µm, preferably 50 µm. The concentration of polysaccharide (in the part of the cardboard which it permeates) is 7-9% by weight, usually approximately 8% by weight.

Calcium Chloride solution (Example 1) is sprayed onto the polysaccharide coating. In the case of the sandwiched layer, the solution should be applied before it is fed to the corrugator to create the flute.

Later the layers are joined together using two single layers and a flute, wherein at least one and preferably all have been laminated with the crosslinked polysaccharide.

Boxes using the corrugated cardboard composition may be formed by methods well known in the art. A first trimmer may be used to perforate the boards to create flaps and handles. Rubber sponges cushion the blades so that they only cut the necessary areas. During the trimming a press condenses the boxes overlapping panels to level out their depth. A folding machine bends the cardboard along score lines (that the corrugator pre-set) and glue is used to join sections together. Finally, the glued sections are folded, to ensure they are not visible. "and/or" where used herein is to be taken as specific disclosure of each of the two specified features or components with or without the other. For example "A and/or B" is to be taken as specific disclosure of each of (i) A, (ii) B and (iii) A and B, just as if each is set out individually herein.

## Claims

1. A greaseproof and waterproof packaging item comprising a composite material, the composite material comprising a fibre substrate and a coating, wherein the coating comprises a cross-linked naturally derived polysaccharide, wherein the cross-linked naturally derived polysaccharide is an alginate, and wherein the composite material further comprises a bio-based plasticiser.

2. The packaging item according to claim 1, wherein the alginate is sodium alginate.

3. The packaging item according to any one of claims 1 or 2, wherein the cross linked naturally derived polysaccharide forms a coating or barrier to at least a surface of the fibre substrate.

4. The packaging item according to any one of claims 1 to 3, wherein the fibre substrate is selected from paper, paperboard, cardboard, vegetable fibres, food waste fibres, and plant based fibres, such as fibres of seaweed origin.

5. The packaging item according to any one of claims 1 to 4, wherein the bio-based plasticiser is selected from the group consisting of konjac glucomannan, Iota-carrageenan, Kappa-carrageenan, low methoxyl pectin, and glycerol.

6. The packaging item according to any one of claims 1 to 5, further comprising sorbitol, mannitol, maltitol, or propylene glycol.

7. The packaging item according to any one of claims 1 to 6, wherein the fibre substrate comprises polyvalent ions, preferably metal cations and most preferably Calcium ions.

8. The packaging item according to any one of claims 1 to 7, wherein the composite further comprises one or more plant-derived saccharide components.

9. The packaging item according to claim 8, wherein the saccharide component is derived from algae.

10. The packaging item according to claim 8or claim 9, wherein the saccharide component is selected from agar, carrageenan and pectin.

11. A packaging item according to any one of claims 1 to 10, wherein the coating further comprises a polyphenol, such as a tannin, such as tannic acid.

12. The packaging item according to any one of claims 1 to 11, wherein the item is selected from a cup, box, tray, clamshell, plate, bag, wrap, bottle, brick and cup holder.

13. The packaging item according to any one of claims 1 to 12, wherein the coating is applied to an inner surface of the packaging item.

14. The packaging item according to any one of claims 1 to 13, wherein the coating is also heat resistant.

15. A process for making the packaging item of any one of claims 1 to 14, wherein the coating is applied to the fibre substrate by reverse roll, gravure, meyer bar, air knife, doctor blade, slot die, curtain coating or a spraying technique.

## Patentansprüche

1. Fett- und wasserdichter Verpackungsgegenstand, umfassend ein Verbundmaterial, wobei das Verbundmaterial ein Fasersubstrat und eine Beschichtung umfasst, wobei die Beschichtung ein vernetztes, natürlich gewonnenes Polysaccharid umfasst, wobei das vernetzte, natürlich gewonnene Polysaccharid ein Alginat ist und wobei das Verbundmaterial ferner einen Weichmacher auf biologischer Basis umfasst.

2. Verpackungsgegenstand nach Anspruch 1, wobei das Alginat Natriumalginat ist.

3. Verpackungsgegenstand nach einem der Ansprüche 1 oder 2, wobei das vernetzte, natürlich gewonnene Polysaccharid eine Beschichtung oder Barriere auf mindestens einer Oberfläche des Fasersubstrats bildet.

4. Verpackungsgegenstand nach einem der Ansprüche 1 bis 3, wobei das Fasersubstrat ausgewählt ist aus Papier, Pappe, Karton, Pflanzenfasern, Fasern aus Lebensmittelabfällen und Fasern auf pflanzlicher Basis, wie beispielsweise Fasern aus Meeresalgen.

5. Verpackungsgegenstand nach einem der Ansprüche 1 bis 4, wobei der biobasierte Weichmacher ausgewählt ist aus der Gruppe, bestehend aus Konjak-Glucomannan, Iota-Carrageenan, Kappa-Carrageenan, Niedrig-Methoxyl-Pektin und Glycerin.

6. Verpackungsgegenstand nach einem der Ansprüche 1 bis 5, ferner umfassend Sorbitol, Mannitol, Maltitol oder Propylenglykol.

7. Verpackungsgegenstand nach einem der Ansprüche 1 bis 6, wobei das Fasersubstrat mehrwertige Ionen, vorzugsweise Metallkationen und besonders bevorzugt Calciumionen, umfasst.

8. Verpackungsgegenstand nach einem der Ansprüche 1 bis 7, wobei der Verbundstoff ferner eine oder mehrere aus Pflanzen gewonnene Saccharidkomponenten umfasst.

9. Verpackungsgegenstand nach Anspruch 8, wobei die Saccharidkomponente aus Algen gewonnen wird.

10. Verpackungsgegenstand nach Anspruch 8 oder 9, wobei die Saccharidkomponente ausgewählt ist aus Agar, Carrageen und Pektin.

11. Verpackungsgegenstand nach einem der Ansprüche 1 bis 10, wobei die Beschichtung ferner ein Polyphenol, wie beispielsweise ein Tannin, wie Tanninsäure, umfasst.

12. Verpackungsgegenstand nach einem der Ansprüche 1 bis 11, wobei der Gegenstand ausgewählt ist aus einem Becher, einer Schachtel, einem Tablett, einer Schale, einem Teller, einem Beutel, einer Hülle, einer Flasche, einem Ziegelstein und einem Becherhalter.

13. Verpackungsgegenstand nach einem der Ansprüche 1 bis 12, wobei die Beschichtung auf eine Innenoberfläche des Verpackungsgegenstandes aufgebracht wird.

14. Verpackungsgegenstand nach einem der Ansprüche 1 bis 13, wobei die Beschichtung auch hitzebeständig ist.

15. Prozess zur Herstellung des Verpackungsgegenstandes nach einem der Ansprüche 1 bis 14, wobei die Beschichtung durch Umkehrwalzen, Tiefdruck, Meyer Bar, Luftmesser, Rakel, Schlitzdüse, Schleierbeschichtung oder eine Sprühtechnik auf das Fasersubstrat aufgebracht wird.

## Revendications

1. Article d'emballage ingraissable et imperméable comprenant un matériau composite, le matériau composite comprenant un substrat fibreux et un revêtement, dans lequel le revêtement comprend un polysaccharide réticulé d'origine naturelle, dans lequel le polysaccharide réticulé d'origine naturelle est un alginate, et dans lequel le matériau composite comprend en outre un bioplastifiant.

2. Article d'emballage selon la revendication 1, dans lequel l'alginate est un alginate de sodium.

3. Article d'emballage selon l'une quelconque des revendications 1 ou 2, dans lequel le polysaccharide réticulé d'origine naturelle forme un revêtement ou une barrière sur au moins une surface du substrat fibreux.

4. Article d'emballage selon l'une quelconque des revendications 1 à 3, dans lequel le substrat fibreux est sélectionné à partir de papier, de carton, de carton blanchi, de fibres végétales, de fibres de déchets alimentaires, et de fibres à base de plantes, telles que des fibres à base d'algues marines.

5. Article d'emballage selon l'une quelconque des revendications 1 à 4, dans lequel le bioplastifiant est sélectionné parmi le groupe constitué de konjac glucomannane, de carraghénane iota, de carraghénane kappa, de pectine faiblement méthoxylée, et de glycérol.

6. Article d'emballage selon l'une quelconque des revendications 1 à 5, comprenant en outre du sorbitol, du mannitol, du maltitol, ou du propylène glycol.

7. Article d'emballage selon l'une quelconque des revendications 1 à 6, dans lequel le substrat fibreux comprend des ions polyvalents, de préférence des cations métalliques et de manière préférée entre toutes des ions calcium.

8. Article d'emballage selon l'une quelconque des revendications 1 à 7, dans lequel le composite comprend en outre un ou plusieurs composants de saccharide dérivés de plantes.

9. Article d'emballage selon la revendication 8, dans lequel le composant de saccharide est dérivé d'algues.

10. Article d'emballage selon la revendication 8 ou la revendication 9, dans lequel le composant de saccharide est sélectionné à partir d'agar, de carraghénane et de pectine.

11. Article d'emballage selon l'une quelconque des revendications 1 à 10, dans lequel le revêtement comprend en outre un polyphénol, tel qu'un tannin, tel qu'un acide tannique.

12. Article d'emballage selon l'une quelconque des revendications 1 à 11, dans lequel l'article est sélectionné à partir d'un gobelet, d'une boîte, d'un plateau, d'une pelle à benne preneuse, d'une plaque, d'un sac, d'une enveloppe, d'une bouteille, d'une brique et d'un porte-gobelet.

13. Article d'emballage selon l'une quelconque des revendications 1 à 12, dans lequel le revêtement est appliqué à une surface interne de l'article d'emballage.

14. Article d'emballage selon l'une quelconque des revendications 1 à 13, dans lequel le revêtement est également résistant à la chaleur.

15. Processus de fabrication de l'article d'emballage selon l'une quelconque des revendications 1 à 14, dans lequel le revêtement est appliqué au substrat fibreux par rouleau de transfert inversé, gravure, barre de Meyer, couteau pneumatique, racle, filière plate, couchage par voile ou une technique de pulvérisation.
